Europäisches Patentamt

European Patent Office

Office européen des brevets

(11) Numéro de publication: **0 033 253 B1**

(12) **FASCICULE DE BREVET EUROPEEN**

(45) Date de publication du fascicule du brevet: **30.04.86**

(51) Int. Cl.⁴: **G 01 N 21/31, G 01 J 1/36**

(21) Numéro de dépôt: **81400016.2**

(22) Date de dépôt: **08.01.81**

(54) **Dispositif de mesure photométrique pour solutions complexes à bruit de fond variable.**

(30) Priorité: **23.01.80 FR 8001408**

(43) Date de publication de la demande:
**05.08.81 Bulletin 81/31**

(45) Mention de la délivrance du brevet:
**30.04.86 Bulletin 86/18**

(84) Etats contractants désignés:
**BE CH DE GB IT LI NL SE**

(56) Documents cités:
**DE-A-2 620 006**
**FR-A-2 106 754**
**FR-A-2 142 525**
**FR-A-2 177 821**
**FR-A-2 317 638**
**US-A-3 690 772**
**US-A-4 088 387**

(73) Titulaire: **COMMISSARIAT A L'ENERGIE
ATOMIQUE Etablissement de Caractère
Scientifique Technique et Industriel
B.P. 510
F-75752 Paris Cedex 15 (FR)**

(72) Inventeur: **Boisde, Gilbert
30, rue Charles de Gaulle
F-91440 Bures sur Yvette (FR)**
Inventeur: **Bonnejean, Claude
Résidence La Ferme du Temple BAT.E 3
F-91130 Ris Orangis (FR)**
Inventeur: **Perez, Jean Jacques
18, Villa Eugénie
F-92320 Chatillon (FR)**

(74) Mandataire: **Mongrédien, André et al
c/o BREVATOME 25, rue de Ponthieu
F-75008 Paris (FR)**

Courier Press, Leamington Spa, England.

## Description

La présente invention concerne un dispositif de mesure photométrique permettant d'étudier automatiquement, des solutions complexes à "bruit de fond" variable.

De façon plus précise, l'invention concerne un dispositif permettant de déterminer de façon séquentielle ou quasi-continue la concentration de plusieurs espèces chimiques, contenues dans une même solution. Ce dispositif permet notamment de suivre les variations de la concentration de ces espèces chimiques, par exemple, lors d'une dilution, d'une réaction chimique, d'une extraction par solvant, d'un appauvrissement de la concentration d'une ou plusieurs espèces dans un bain, etc. Cette solution peut être plus ou moins trouble et/ou peut contenir des espèces chimiques parasites qui constituent un bruit de fond, variable, ou non. Ces espèces chimiques parasites peuvent, par exemple, résider dans le salissement progressif des parois des cellules, ou cuves de mesure photométrique, par des solutions à étudier, qui ne sont jamais parfaitement limpides ou bien peuvent être des sous-produits de réactions chimiques, par exemple, lors d'un suivi d'une réaction chimique. Ceci est généralement le cas pour des solutions industrielles.

On connaît actuellement de nombreux types de colorimètres, photomètres ou spectrophotomètres, destinés à mesurer la concentration des espèces chimiques en solutions par application de la loi de Beer-Lambert. Les déterminations photométriques à plusieurs longueurs d'ondes ont déjà fait l'objet de diverses protections industrielles et d'appareils commerciaux.

On connaît, de plus, l'analyse photométrique différentielle à deux longueurs d'ondes permettant d'éliminer un bruit de fond ou une turbidité, supposé être identique aux deux longueurs d'ondes de mesure. Pour plus de renseignements sur cette mesure différentielle, à deux longueurs d'ondes, on peut se référer, par exemple, au brevet FR—A—2 106 754 déposé le 23 septembre 1970 par le Commissariat a L'energie Atomique et intitulé "Analyseur photométrique à deux longueurs d'ondes pour le dosage d'éléments dans une solution".

Il existe aussi des dispositifs permettant de connaître au moyen de fibres optiques, pour la mesure à distance, la concentration de n-1 espèces chimiques à l'aide de $n$ longueurs d'onde. Les calculs permettant de connaître la concentration de ces n-1 espèces chimiques et la description de ce dispositif sont décrits dans le brevet FR—A—2 317 638 déposé le 9 juillet 1975 par le Commissariat a L'energie Atomique et intitulé "Dispositif d'analyse des constituants d'une solution par mesure photométrique".

Actuellement, les différents dispositifs destinés à mesurer la concentration d'une espèce chimique en solution utilisent un système de références nécessaire à la détermination de la densité optique, donc de la concentration de cette espèce chimique. Ce dispositif de référence utilise, par exemple, une solution de référence contenant uniquement l'espèce chimique pure ou utilise un "blanc d'échantillonnage" lié au pouvoir absorbant du solvant. Pour une espèce chimique dissoute dans un solvant, en général, le "blanc d'échantillonnage" est fait à partir dudit solvant pur.

De plus, ces dispositifs sont limités quant à leurs utilisations. En effet, dans le cas d'une forte absorption de la lumière par l'espèce chimique, la densité optique ou absorbance liée à cette espèce peut prendre une valeur considérable. La valeur de la densité optique dépend, non seulement du coefficient d'extinction propre à l'espèce chimique, mais encore, de la concentration en solution de cette espèce. Dans ces conditions, on est obligé de faire un prélèvement de solution et d'effectuer des dilutions autant de fois que nécessaire, ceci est généralement le cas pour des solutions industrielles fortement concentrées en une ou plusieurs espèces chimiques.

Afin de permettre une étude directe de la concentration des différentes espèces chimiques en solution, c'est-à-dire d'éviter tout prélèvement de solution, ce qui peut être gênant lors d'un suivi de réaction, il est intéressant de pourvoir faire la détermination de ces concentrations en utilisant un dispositif pouvant travailler, non seulement sur les pics d'absorption, mais encore sur les flancs et même sur les pieds de courbes du spectre d'absorption tracé au préalable. Les dispositifs, actuellement connus, tels que ceux décrits dans les documents US—A—3 690 772 et FR—A—2 142 525, sont très mal adaptés à la détermination de densité optique sur les flancs et pieds de courbes.

Par ailleurs, on connait des dispositifs permettant de discriminer ou distinguer les uns des autres des faisceaux lumineux tels que ceux décrits dans les documents DE—A—2 620 006 et US—A—4 088 387.

La présente invention a pour but de remédier à ces inconvénients et, notamment de permettre la suppression d'un système de références et la possibilité de travailler sur les flancs et pieds de courbes du spectre d'absorption, donc d'éviter tout prélèvement de solution.

La présente invention a pour objet un dispositif de mesure photométrique permettant d'étudier automatiquement, des solutions complexes à bruit de fond variable.

De facon connue, le dispositif de l'invention comprend:

— une source lumineuse régulée permettant d'éclairer, au moyen d'une optique adéquate, une cellule de mesure pouvant contenir une solution à étudier,

— des moyens de division du faisceau lumineux issu de la cellule de mesure en $n$ faisceaux lumineux où $n$ est un entier supérieur à 2,

— des moyens d'équilibrage permettant d'équilibrer l'intensité lumineuse des $n$ faisceaux lumineux,

— des moyens pour rendre monochromatique les *n* faisceaux lumineux de façon à associer à chacun de ces *n* faisceaux une longueur d'onde déterminée au préalable,

— des moyens de détection aptes à transformer chacun des *n* faisceaux lumineux reçus en un signal électrique correspondent,

— un ensemble de calcul analogique permettant de calculer la concentration de, au plus, n-1 espèces chimiques présentes dans la solution, et

— des moyens de visualisation des résultas.

Ce dispositif se caractérise en ce qu'il comprend, de plus, au moins un discriminateur permettant de distinguer les *n* faisceaux lumineux les uns des autres, ce discriminateur apte à tourner autour d'un axe comprenant un miroir plan et une pièce comportant des trous, traversant radialement cette pièce, le miroir plan et les trous étant placés de telle façon que l'un desdits *n* faisceaux lumineux entrant par l'un de ces trous soit directement transmis ou bien réfléchi par le miroir, plan et, ressortant par un autre trou atteigne les moyens de détection, ces trous étant au moins au nombre de quatre.

Selon un mode préféré de l'invention, l'ensemble de calcul analogique présente un caractère modulaire permettant de calculer une expression de la forme:

$$k \, \mathrm{Log} \frac{(I)_\alpha}{(I)_\beta}$$

où k représente un coefficient d'atténuation, $(I)_\alpha$ l'intensité lumineuse de l'un des *n* faisceaux lumineux auquel est associée la longueur d'onde $\lambda_\alpha$ et $(I)_\beta$ l'intensité lumineuse d'un autre faisceau lumineux auquel est associée la longueur d'onde $\lambda_\beta$.

L'expression mathématique ci-dessus découle d'une simplification de la mesure différentielle mise en oeuvre dans le dispositif conforme à l'invention. En effet, l'équilibrage automatique, avant toute mesure, des transmission optiques initiales $(I_o)_\alpha$ et $(I_o)_\beta$ associées respectivement aux longueurs d'onde $\lambda_\alpha$ et $\lambda_\beta$ tel que:

$$\mathrm{Log} \frac{(I_o)_\alpha}{(I_o)_\beta} = 1,$$

évite la mesure d'un "blanc d'échantillonnage" et la compensation d'un zéro d'échelle. En revanche, il est nécessaire d'utiliser une source lumineuse bien régulée afin que sa stabilité relative aux longueurs d'onde soit assurée. Dans ce cas, la densité optique différentielle résultante devient:

$$+\Delta D = D_\alpha - D_\beta = \mathrm{Log} \frac{(I)_\beta}{(I)_\alpha},$$

où $D_\alpha$ représente la densité optique associée à la

longueur d'onde $\lambda_\alpha$ et $D_\beta$ la densité optique associée à la longueur d'onde $\lambda_\beta$.

Lorsque la mesure d'une espèce chimique présente un pic d'absorption, partiellement occulté par un "bruit de fond" variable, généralement la détermination de la densité optique associée à cette espèce est déterminée grâce à la correction dite d'Allen. Dans ces conditions, pour déterminer la densité optique correspondant à l'espèce chimique, on utilise trois longueurs d'ondes, une de mesure et deux de référence (on peut se référer au brevet FR—A—2 317 638). En général, il est rare que le spectre d'absorption d'une espèce chimique soit symétrique par rapport au pic d'absorption, aussi cette correction, lorsqu'elle est utilisée, reste approximative. En revanche, sa généralisation peut être faite en l'absence de symétrie au spectre d'absorption.

On peut ainsi démontrer que de manière générale, quel que soit le choix des longueurs d'onde $\lambda_1$, $\lambda_2$ et $\lambda_3$, la mesure de l'espèce en solution est donnée par:

$$C = K \left[ \mathrm{Log} \frac{I_3}{I_2} + k \, \mathrm{Log} \frac{I_1}{I_2} \right],$$

où C représente la concentration de l'espèce, K un coefficient dépendant du dispositif et de la solution à étudier, et k un coefficient de proportionnalité dépendant des trois longueurs d'ondes choisies $\lambda_1$, $\lambda_2$ et $\lambda_3$. Cette expression découle de la loi de Beer-Lambert et de la simplification de la mesure différentielle donnée ci-dessus.

Selon un mode préféré de l'invention, ce dispositif comprend des moyens pour rendre monochromatique chaque faisceau lumineux, qui sont constitués par des filtres interférentiels fixes, correspondant à un intervalle de longueur d'onde $(\lambda \pm \Delta \lambda)$ déterminée et adaptée au type de mesure désiré.

Selon un autre mode préféré de l'invention, ce dispositif comprend des moyens pour rendre monochromatique chaque faisceau lumineux qui sont constitués par des monochromateurs.

L'utilisation de filtres interférentiels fixes ou de monochromateur permet de travailler sur n'importe quelle partie du spectre d'absorption et en particulier sur les flancs et pieds de courbe du spectre d'absorption. La mesure différentielle permettant d'éliminer un "bruit de fond" ou une turbidité peut être effectuée entre des flancs ou des pieds de courbes du spectre d'absorption. En conséquence, l'exploitation du spectra d'absorption d'une espèce chimique est possible avec deux ou trois longueurs d'ondes, situées du même côté du pic d'absorption. Ceci correspond à l'extrapolation de la correction d'Allen. L'analyse mathématique, permet de montrer que la concentration de l'espèce chimique, que l'on cherche à déterminer, est donnée par une expression du même type que celle donnée précédemment. Dans ces conditions, le coefficient d'atténuation k peut être positif ou négatif.

Il est à noter cependant que ce type de correction ne peut être appliqué que pour des espèces spectralement connues. Pour des solutions concentrées, la détermination de la concentration par la mesure en pied de courbe est rigoureuse si la loi de Beer-Lambert est vérifiée aux trois longueurs d'onde choisies et cela, même en présence d'une turbidité ou d'un bruit de fond constant. Il en est de même pour un bruit de fond variable suivant la loi de Beer-Lambert lorsque l'on utilise des filtres interférentiels, ou des monochromateurs, bien adaptés à l'espèce interférente. Dans ce cas, le coefficient K nécessite toujours un préétalonnage.

Ce type de calcul permet la détermination, en pied de courbe, des concentrations d'espèces chimiques dont l'absorbance au niveau du pic d'absorption est trop élevée, ce qui est souvent le cas pour des solutions industrielles où la concentration des espèces chimiques en solution est importante. De plus, ce type de calcul permet l'élimination d'un bruit de fond variable ou non pouvant interférer avec l'espèce chimique à doser.

L'utilisation de trois longueurs d'ondes permet d'analyser, soit deux espèces chimiques avec déduction de turbidité, soit une seule espèce chimique avec correction d'un bruit de fond variable ou non dans la bande spectrale étrudiée.

Dans le cas de deux espèces chimiques interférant avec un bruit de fond variable, il est nécessaire d'adopter une quatrième longueur d'onde. Dans ces conditions, la concentration de ces deux espèces chimiques est donnée par une expression mathématique, du même genre que celle citée précédemment avec un terme supplémentaire du type:

$$k \, \mathrm{Log} \frac{(I)_\alpha}{(I)_\beta}$$

où comme précédemment, $(I)_\alpha$ est l'intensité lumineuse associée à la longueur d'onde $\lambda_\alpha$ et $(I)_\beta$ l'intensité lumineuse associée à la longueur d'onde $\lambda_\beta$. Ceci justifie bien le caractère modulaire de l'ensemble de calcul logique.

Selon un mode de réalisation préférentiel de l'invention, le discriminateur est apte à tourner autour de son axe d'un mouvement continu de façon à permettre, après traitement des informations lumineuses puis électriques, de visualiser des courbes de variation de la concentration au cours du temps des au plus n-1 espèces chimiques présentes dans la solution à étudier.

Le dispositif de repérage du faisceau lumineux issu du discriminateur est relié électriquement à l'ensemble de calcul analogique et permet de déclencher les calculs associés audit faisceau.

D'autres caractéristiques et avantages de l'invention ressortiront mieux à l'aide de la description qui va suivre, donnée à titre purement illustratif et non limitatif, en référence aux figures annexées dans lesquelles:

— la figure 1 représente sur un spectre d'absorption quelconque, la correction d'Allen et sa généralisation;
— la figure 2 représente, sur un spectre d'absorption quelconque, l'extrapolation de la correction d'Allen;
— la figure 3 représente un schéma d'ensemble d'un dispositif à trois voies, conforme à l'invention;
— la figure 4 représente schématiquement les différentes positions du discriminateur pour un dispositif à trois voies;
— la figure 5 représente schématiquement l'ensemble de calcul analogique conformément à l'invention;
— la figure 6 représente schématiquement une partie d'un dispositif à quatre voies, conformément à l'invention;
— la figure 7 représente schématiquement les différentes positions du discriminateur pour un dispositif à quatre voies; et
— la figure 8 représente schématiquement deux discriminateurs, selon l'invention placés en cascade.

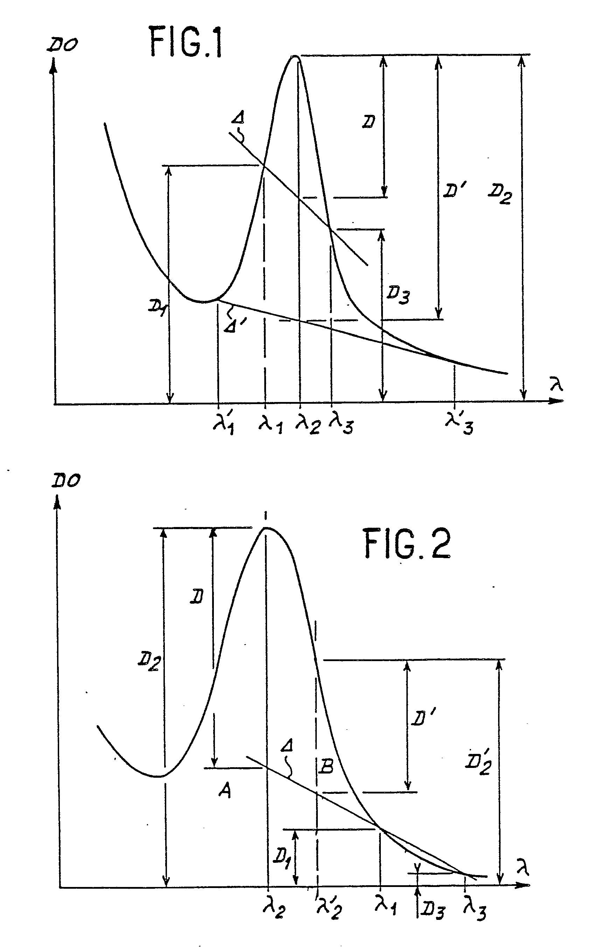

Sur la figure 1, on a représenté un spectre d'absorption donnant la densité optique (D.O) ou absorbance en fonction de la longueur d'onde ($\lambda$). La correction d'Allen consiste à prendre deux longueurs d'onde $\lambda_1$ et $\lambda_3$, choisies à égale distance de part et d'autre du pic d'absorption correspondant à la longueur d'onde $\lambda_2$. Le bruit de fond est assimilé à une fonction linéaire avec la longueur d'onde (droite $\Delta$). En conséquence, la concentration de cette espèce est proportionnelle à la densité optique résultante D telle que:

$$D = D_2 - \frac{D_1 + D_3}{2},$$

avec $D_1$, $D_2$, $D_3$ les densités optiques correspondant respectivement aux longueurs d'onde $\lambda_1$, $\lambda_2$, $\lambda_3$.

La généralisation de la correction d'Allen consiste à faire le même calcul en prenant deux longueurs d'onde $\lambda'_1$ et $\lambda'_3$, choisies de part et d'autre, mais de façon quelconque, de la longueur d'onde $\lambda_2$. Le bruit de fond est assimilé à une fonction linéaire avec la longueur d'onde (droite $\Delta'$). La concentration de l'espèce est proportionnelle à la densité optique résultante D'.

Sur la figure 2, on a représenté un autre spectre d'absorption. L'extrapolation de la correction d'Allen consiste à prendre deux longueurs d'onde $\lambda_1$ et $\lambda_3$, situées du même côté du pic d'absorption correspondant à la longueur $\lambda_2$, par exemple, à droite du pic d'absorption et en pied de courbe. La droite $\Delta$ définie par les densités optiques $D_1$ et $D_3$ associées aux longueurs d'onde $\lambda_1$ et $\lambda_3$ est extrapolée jusqu'au point (A). La concentration de l'espèce chimique est alors proportionnelle à la densité optique D. Pour déterminer la concentration de cette espèce, on peut tout aussi bien utiliser la densité optique D', ce qui correspond à l'extrapolation de la droite $\Delta$ jusqu'au point (B) pour une longueur d'onde $\lambda'_2$ pris sur un flanc du pic d'absorption. Ceci peut être utilisé de façon avantageuse lorsque le pic d'absorption n'apparaît pas sur le spectre (espèce très concentrée ou fortement absorbante).

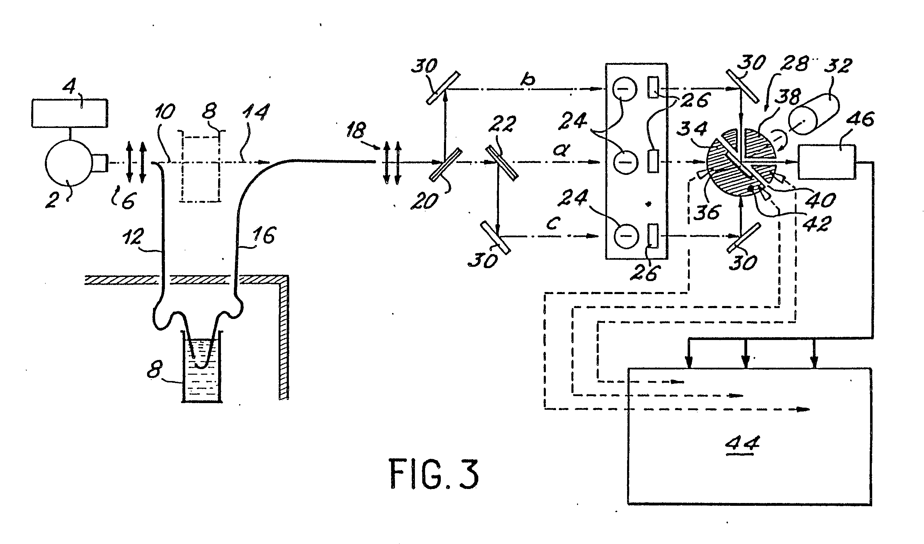

La figure 3 représente un schéma d'ensemble d'un dispositif à trois voies. Une source lumineuse 2, régulée à l'aide d'un dispositif 4 envoie, par l'intermédiaire de lentilles 6, un faisceau de lumière blanche vers une cellule de mesure 8, à remplissage manuel ou à circulation, soit directement 10, soit à l'aide d'une fibre optique 12. La cellule de mesure 8 pouvant contenir la solution à analyser est une cuve optique de conception, soit classique jusqu'à 5 cm de parcours optique, soit spéciale audessus de 5 cm. Le faisceau lumineux sortant de la cellule 8 peut être transmis directement 14, ou à l'aide d'une fibre optique 16 permettant, par exemple, des mesures à distance, sur le reste du dispositif. Dans le cas de produits corrosifs, on peut utiliser l'association de fibres optiques souples et rigides (référence brevet français FR—A—2 317 638).

La lumière issue de la cellule 8 est transformée en taches lumineuses, homogènes, par un système de lentilles 18. Deux lames séparatrices 20 et 22, inclinées à 45° par rapport au faisceau issu de la source permettent de former trois faisceaux lumineux a, b, c. Des systèmes d'équilibrage 24 (coin optique, iris...) permettent d'équilibrer les énergies lumineuses des trois voies. Un ensemble de filtres interférentiels fixes 26, ou de monochromateurs, correctement choisis est placé devant un discriminateur 28 pouvant tourner autour de son axe de façon continue ou non. Les trois faisceaux lumineux a, b, c, sont dirigés sur le discriminateur tournant 28 à l'aide de miroirs plans tel que 30. La rotation du discriminateur 28 est assurée à l'aide d'un moteur tel que 32.

Ce discriminateur tournant 28 est constitué d'un premier demi-cylindre 34 de faible épaisseur, plein, ne permettant pas le passage de la lumière, sur lequel est fixé, au milieu de la partie plate dudit demi-cylindre 34 un miroir plan 36, et d'un deuxième demi-cylindre 38 de dimensions identiques au premier, comportant des trous 40 effectués dans la partie arrondie du demi-cylindre 38. Ces trous 40 sont placés de telle façon que la lumière d'un des faisceaux lumineux a, b ou c entrant par l'un de ces trous soit réfléchi par le miroir plan 36 et ressorte par un autre trou 40. Pour un discriminateur 28 à trois voies, le nombre de trous 40 est au nombre de quatre. Ce discriminateur tournant 28 comprend un dispositif de repérage permettant de repérer le faisceau lumineux qui est réfléchi par le miroir 36. Ce dispositif de repérage peut être constitué, par exemple, d'un trou 42 effectué dans le demi-cylindre 36 ou discriminateur tournant 28, trou 42 qui, lorsque le discriminateur 28 tourne, vient se placer, alternativement, devant trois systèmes optoélectroniques (non représentés). Chacun de ces systèmes est associé à l'un des trois faisceaux a, b, c arrivant sur le discriminateur 28. Ce dispositif de repérage est relié électriquement à l'ensemble de calcul analogique 44 et, permet de déclencher les calculs associés au faisceau réfléchi par le miroir 36 du discriminateur tournant 28. Un unique détecteur 46, apte à transformer la lumière reçue en un signal électrique, est relié à l'ensemble de calcul analogique 44.

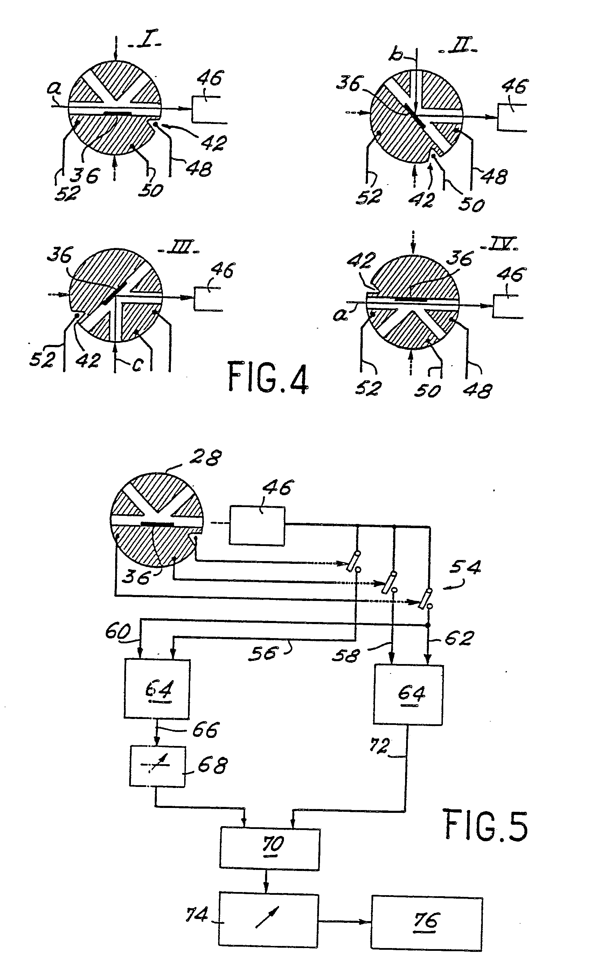

La figure 4 représente les différentes positions du discriminateur tournant pour un dispositif à trois voies. Ce type de dispositif permet l'analyse de deux espèces chimiques en solution avec déduction de turbidité, ou bien d'une seule espèce chimique avec correction d'un bruit de fond, variable ou non.

La figure 4—I montre le passage à travers le discriminateur 28 du seul faisceau a. Ce faisceau lumineux a éclaire le détecteur 46. Le repérage de ce faisceau a est effectué à l'aide, par exemple, d'un trou 42 et d'un dispositif optoélectronique schématisé par la référence 48.

La figure 4—II montre le passage à travers le discriminateur 28 du faisceau b, réfléchi par le miroir 36 et venant éclairer le détecteur 46. Le repérage de ce faisceau b se fait par exemple à l'aide du trou 42 et d'un dispositif optoélectronique représenté par 50.

La figure 4—III montre le passage à travers le discriminateur 28 du faisceau c, réfléchi par le miroir 36 et arrivant sur le détecteur 46. Le repérage de ce faisceau c est effectué à l'aide, par exemple, du trou 42 et d'un dispositif optoélectronique 52.

La figure 4—IV représente le passage du faisceau a, non repéré par le dispositif optoélectronique 48. Ce passage peut être pris en compte pour les calculs, en particulier dans le cas de bruit de fond optique ou courant noir.

Le fait d'utiliser un discriminateur tournant 28 et un dispositif de repérage optoélectronique, fonctionnant comme ci-dessus, permet de n'utiliser comme moyens de détection qu'un unique détecteur 46.

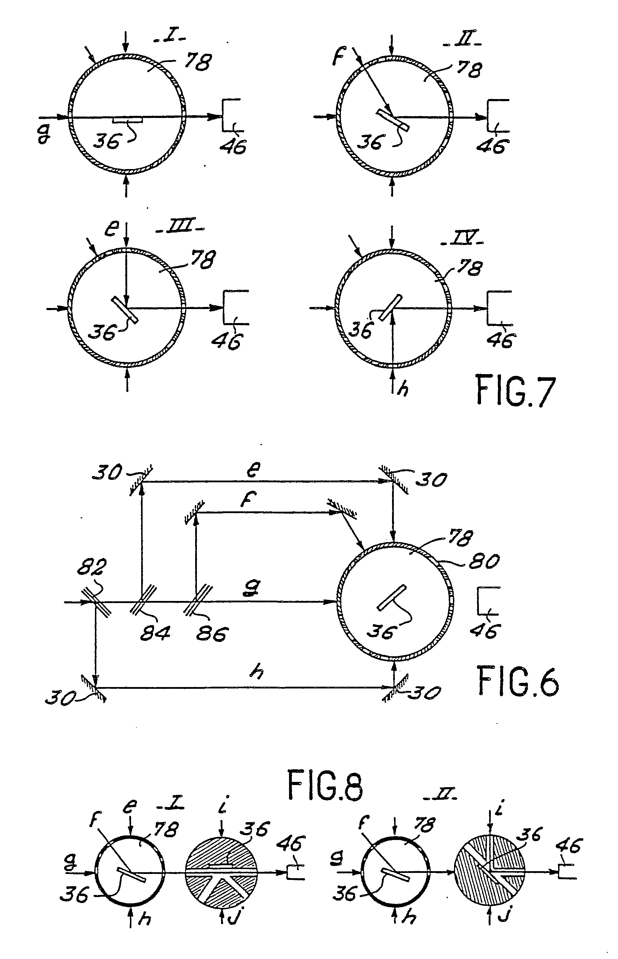

La figure 5 représente schématiquement l'ensemble de calcul analogique. Le dispositif de repérage, décrit ci-dessus, permet de déclencher les calculs associés au faisceau réfléchi par le miroir 36 du discriminateur 28, au moyen d'interrupteurs tels que 54. Cet ensemble de calcul analogique 44 représenté de façon schématique, permet de calculer les expressions mathématique du genre de celles données précédemment. Les signaux électriques issus du détecteur 46 correspondant, par exemple, à une intensité lumineuse $I_1$ associé à la longueur d'onde $\lambda_1$, arrivent en 56. Les signaux électriques correspondant, par exemple à une intensité lumineuse $I_2$ associée à la longueur d'onde $\lambda_2$, arrivent en 60 et 62. Les signaux électriques correspondant, par exemple, à une intensité lumineuse $I_3$ associée à la longueur d'onde $\lambda_3$, arrivent en 58. Ces signaux électriques sont amplifiés à l'aide d'amplificateurs inverseurs logarithmiques 64. L'expression, par exemple:

$$\text{Log}\frac{I_1}{I_2}$$

obtenue ou son inverse arrivant en 66 est multipliée par le facteur d'atténuation k à l'aide d'un multiplicateur 68. L'expression mathématique alors obtenue est additionnée à l'aide d'un sommateur 70 à une expression du type:

$$\text{Log}\frac{I_3}{I_2}\text{(ou son inverse)}$$

arrivant en 72. L'expression obtenue à la sortie du sommateur 70 est alors multipliée par un coefficient K à l'aide d'un multiplicateur 74. Le résultat final obtenu, correspondant à la concentration d'une ou plusieurs espèces chimiques déterminées est alors visualisé à l'aide d'un dispositif 76, par exemple, un enregistreur. Lorsque le discriminateur 28 tourne autour de son axe avec un mouvement continu après traitement des informations lumineuses par le détecteur 46, puis des informations électriques par l'ensemble de calcul analogique 44, des courbes point par point de variation de la concentration au cours du temps des différentes espèces chimiques, présentes dans la solution à étudier, apparaissent sur l'enregistreur 76.

La figure 6 représente schématiquement une partie d'un dispositif à quatre voies. Ce type de dispositif permet l'analyse de trois espèces chimiques en solution avec déduction de turbidité, ou bien de deux espèces chimiques avec correction d'un "bruit de fond", variable ou non.

Le discriminateur 78 à quatre voies est représenté de façon différente par rapport à celui à trois voies. Bien entendu, toute autre forme pourrait être envisagée. Ce discriminateur 78 à quatre voies comprend 6 trous 80 groupés en deux groupes de trois et effectués dans le même demi-cylindre constituant le discriminateur 78. Ce discriminateur tournant 78 est muni d'un miroir plan 36 placé en son milieu. Sur ce discriminateur, arrivent quatre faisceaux lumineux, e, f, g, h, dirigés à l'aide de miroirs tels que 30. Ces quatre faisceaux sont obtenus par séparation d'un faisceau unique à l'aide de lames séparatrices 82, 84, 86 orientées suivant un angle de 45° par rapport au faisceau incident. Comme précédemment, les informations lumineuses sortant du discriminateur 78 sont transformés en un signal électrique au moyen d'un détecteur 46. Le système de repérage du faisceau lumineux réfléchi par le miroir 36 ainsi que l'ensemble de calcul analogique 44 doivent être modifiés par rapport à ceux du dispositif à trois voies.

La figure 7 représente les différentes positions d'un discriminateur tournant pour un dispositif à quatre voies.

La figure 7—I montre le passage du seul faisceau g à travers le discriminateur 78, l'intensité lumineuse du faisceau q étant reçue par un détecteur 46.

La figure 7—II représente le passage du seul faisceau lumineux f à travers le discriminateur 78, ce faisceau lumineux f étant réfléchi par le miroir 36 sur le détecteur 46.

La figure 7—III montre le passage du seul faisceau e à travers le discriminateur 78, ce faisceau e étant réfléchi par le miroir 36 sur le détecteur 46.

La figure 7—IV montre le passage du seul faisceau h à travers le discriminateur 78, ce faisceau h étant réfléchi par le miroir 36 sur le détecteur 46.

La figure 8 représente deux discriminateurs tournants placés en cascade. Sur cette figure a été représentée l'association d'un discriminateur tournant à quatre voies 78 et d'un discriminateur tournant à trois voies 28. Le discriminateur 78 permet le passage en direction du détecteur, de faisceaux tels que e, f, g, h de la même façon que précédemment, à condition que le discriminateur 28 soit positionné correctement et à l'arrêt (figure 8—I). En revanche, le discriminateur 28 ne permet, alternativement, le passage que de deux faisceaux lumineux, par exemple i et j à condition qu'aucun faisceau ne sorte du discriminateur 28 (figure 8—II).

Bien entendu, la forme du discriminateur, ainsi que le nombre de voies de celui-ci dépendent du nombre d'espèces chimiques en solution, de l'existence d'un bruit de fond ou non, ou de la présente d'une turbidité. De plus, pour un nombre important de voies, plusieurs discriminateurs à 2, 3, 4, etc. voies peuvent être placés en cascade.

Le dispositif conforme à l'invention de conception simple et permettant la mise en oeuvre de calculs originaux, permet de déterminer directement en ligne la concentration de plusieurs espèces chimiques présentes dans une même solution, quelle que soit la complexité de cette solution et la concentration des différentes espèces chimiques. La possibilité de travailler pour ce dispositif, sur les flancs et pieds de courbes, où la valeur de la densité optique est plus faible que celle du pic d'absorption, permet l'étude d'espèces chimiques fortement concentrées. La concentration des différentes espèces apparaît sous forme de courbes point par point, lorsque le discriminateur tourne de façon continu. Bien entendu, la distance entre deux points consécutifs dépend de la vitesse de rotation du discriminateur. Pour certains contrôles industriels de la variation de la concentration des différentes espèces chimiques au cours du temps, il est nécessaire d'obtenir un tracé de courbe en continu. Dans ces conditions, on peut toujours arrêter le discriminateur et utiliser plusieurs détecteurs (un pour chaque longueur d'onde), comme moyens de détection.

Autrement dit, lorsqu'une mesure photométrique séquentielle suffit, on utilise les propriétés du discriminateur tournant associé à un unique détecteur, en revanche lorsqu'une mesure photométrique en continu s'impose, (par exemple, variation brusque de la concentration d'une ou plusieurs espèces chimiques), on utilise autant de détecteurs que de longueurs d'onde nécessaires au calcul de la concentration des espèces chimiques présentes dans la solution que l'on étudie. Dans ces conditions, le discriminateur 28 muni de son miroir permet de renvoyer la lumière des $n$ faisceaux lumineux, arrivant sur ce dernier, vers les $n$ détecteurs. De plus, un discriminateur à quatre voies, tel que le discriminateur 78 ne permet plus que l'analyse de deux espèces chimiques avec déduction de turbidité, ou bien d'une seule espèce chimique avec correction d'un "bruit de fond", au lieu de trois espèces chimiques avec déduction de turbidité ou bien de deux espèces chimiques avec correction d'un bruit de fond.

Lorsque l'on veut connaître la concentration d'une ou plusieurs espèces chimiques, par exemple, interférant avec un bruit de fond, ou bien de forte absorbance, il est nécessaire d'étalonner le dispositif de façon à vérifier la linéarité entre l'absorbance et la concentration (loi de Beer-Lambert) et de façon à déterminer les coefficients k d'atténuation (fonction des longueurs d'onde utilisées) et K dépendant du dispositif et de la solution que l'on étudie.

Le dispositif conforme à l'invention a été testé avec de l'uranium VI en milieu nitrique 2N. Après équilibrage des voies, la première correspondant à une longueur d'onde de 418 nanomètres, pour le pic d'absorption, la deuxième à une longueur d'onde de 449 nanomètres pour le flanc et la troisième à une longueur d'onde de 530 nanomètres, on a vérifié la loi de Beer-Lambert pour les rapports

$$\frac{530}{418}, \frac{530}{449}, \frac{449}{418}.$$

La possibilité d'une mesure par filtre interférentiel sur les flancs du pic d'absorption est ainsi confirmée.

Bien sûr ceci n'est qu'un exemple et l'on aurait pu prendre des longueurs d'ondes différentes et choisies, par example, sur un pied de courbe. Les absorbances relatives à 449 et 418 nanomètres d'une part, à 530 et 449 d'autre part sont respectivement de $22{,}2.10^{-3}C$ et $12{,}3.10^{-3}C$ par centimètre de parcours optique, où C est la concentration en gramme par litre.

Le dispositif a aussi été testé avec de l'uranium VI en présence de Fer III, à différentes concentrations, dans une solution nitrique 2N. Il est à noter que le fer III intefére avec l'uranium VI. La détermination du fer III en milieu nitrique 2N montre que la loi de Beer-Lambert est suivie jusqu'à une concentration de 4 g/l, concentration maximale pour les solutions de retraitement. Les absorbances relatives entre 449 et 418 nanomètres d'une part et entre 530 et 449 nanomètre d'autre part donnent respectivement $6{,}1.10^{-3}C$ et $0{,}2.10^{-3}C$, où C est la concentration du Fer III en g/l.

A l'aide de ce qui précède, on peut déduire la concentration d'uranium en présence de fer III.

L'application d'un coefficient d'atténuation k à l'absorbance relative la plus élevée de l'élément interférant permet une bonne appréciation de la concentration de l'uranium par résolution de deux équations à deux inconnues:

$$10^3 \cdot D_{418}^{449} = 22{,}2\ C_U + 6{,}1\ C_{Fe}\text{ et}$$

$$10^3 \cdot D_{449}^{530} + 12{,}3\ C_U + 0{,}2\ G_{Fe}$$

ce qui donne:

$$C_U = K\ \left[\ D_{449}^{530} - 0{,}028\ D_{418}^{449}\ \right]$$

La conception de l'appareil permet de régler directement le coefficient k = 0,28 par un potentiomètre, puis d'obtenir une inscription en concentration par réglage du coefficient K.

La détermination de la concentration en uranium est obtenue avec une erreur relative de 5% pour une concentration de 1,5 g/l d'uranium VI en présence de 4 g/l de Fer III.

A acidité constante (ou connue), on peut enfin démontrer, et c'est un avantage du dispositif que la mesure du fer est possible en présence d'uranium. Il suffit d'intervertir les coefficients multiplicateurs suivant la formulation:

$$\text{Log}\frac{I_{449}}{I_{418}} + k\,\text{Log}\frac{I_{449}}{I_{530}}\text{avec }k < 1.$$

De même, on a pu démontrer que l'uranium peut être analysé dans des solutions d'acidité variable. Il suffit pour cela de trois longueurs d'onde pour déterminer, d'une part, la concentration en uranium avec correction de l'acidité, et d'autre part la concentration en nitrates totaux (c'est-à-dire la concentration de l'acide nitrique) par un calcul du type:

$$[NO_3] = K\frac{\text{Log}\dfrac{I_3}{I_2} + k_1\text{Log}\dfrac{I_1}{I_2} + k_2}{\text{Log}\dfrac{I_1}{I_2} + k_3\text{Log}\dfrac{I_3}{I_2} + k_4}$$

Ce calcul est aisé à réaliser à l'aide du dispositif conforme à l'invention, du fait même de sa conception modulaire, précédemment décrite.

**Revendications**

1. Dispositif de mesure photométrique permettant d'étudier automatiquement des solutions complexes à bruit de fond variable comprenant:

— une source lumineuse (2) régulée (4) permettant d'éclairer, au moyen d'une optique adéquate (6 et 12), une cellule de mesure (8) pouvant contenir une solution à étudier,
— des moyens de division (20, 22, 82, 84, 86) du faisceau lumineux issu de la cellule de mesure (8) en *n* faisceaux lumineux où *n* est un entier supérieur à 2,

— des moyens d'équilibrage (24) permettant d'équilibrer l'intensité lumineuse des *n* faisceaux lumineux,

— des moyens (26) pour rendre monochromatique les *n* faisceaux lumineux de façon à associer à chacun de ces *n* faisceaux une longueur d'onde ($\lambda_1$, $\lambda_2$, $\lambda_3$) déterminée au préalable,

— des moyens de détection (46) aptes à transformer chacun des *n* faisceaux lumineux reçu en un signal électrique correspondent,

— un ensemble de calcul analogique (44) permettant de calculer la concentration de, au plus, n-1 espèces chimiques présentes dans la solution, et

— des moyens de visualisation (76) des résultats,

caractérisé en ce qu'il comprend, de plus, au moins un discriminateur (28, 78) permettant de distinguer les *n* faisceaux lumineux les uns des autres, ce discriminateur (28, 78) apte à tourner autour d'un axe comprenant un miroir plan (36) et une pièce (38) comportant des trous (40), traversant radialement cette pièce (38), le miroir plan (36) et les trous (40) étant placés de telle façon que l'un desdits *n* faisceaux lumineux entrant par l'un de ces trois soit directement transmis ou bien réfléchi par le miroir plan (36), et ressortant par un autre trou (40) atteigne les moyens de détection (46), ces trous étant au moins au nombre de quatre.

2. Dispositif de mesure photométrique selon la revendication 1, caractérisé en ce que le discriminateur (28 et 78) est apte à tourner autour de son axe d'un mouvement continu.

3. Dispositif de mesure photométrique selon l'une quelconque des revendications 1 et 2, caractérisé en ce que les moyens de détections (46) sont constitués par un unique détecteur dans le cas d'une mesure photométrique séquentielle.

4. Dispositif de mesure photométrique selon l'une quelconque des revendications 1 et 2, caractérisé en ce que les moyens de détection (46) sont constitués par *n* détecteurs, le discriminateur (28, 78) restant fixe, dans le cas d'une mesure photométrique en continu.

5. Dispositif de mesure photométrique selon l'une quelconque des revendications 1 à 4, caractérisé en ce que le discriminateur (28, 78) comprend un dispositif de repérage permettant de repérer le faisceau lumineux issu du discriminateur, ce dispositif de repérage étant relié électriquement à l'ensemble de calcul analogique (44) et permettant de déclencher les calculs associés au faisceau issu du discriminateur.

6. Dispositif de mesure photométrique selon l'une quelconque des revendications 1 à 5, caractérisé en ce que les moyens de division du faisceau lumineux issu de la cellule de mesure (8) en *n* faisceaux lumineux sont constitués par n-1 lames séparatrices (20, 22, 82, 84, 86) disposées l'une derrière l'autre, inclinées à 45° par rapport au faisceau issu de la cellule de mesure (8) et par des miroirs plans (30), permettant de diriger les *n* faisceaux sur le discriminateur (28, 78).

7. Dispositif de mesure photométrique selon l'une quelconque des revendications 1 à 6, caractérisé en ce que les moyens pour rendre monochromatique chacun des *n* faisceaux lumineux sont constitués par des filtres interférentiels (26) fixes, correspondant à un intervalle de longueur d'onde ($\lambda\pm\Delta\lambda$) déterminé et adapté au type de mesure désiré.

8. Dispositif de mesure photométrique selon l'une quelconque des revendication 1 à 6, caractérisé en ce que les moyens pour rendre monochromatique chacun des *n* faisceaux lumineux sont constitués par des monochromateurs (26).

9. Dispositif de mesure photométrique selon l'une quelconque des revendications 1 à 8, caractérisé en ce que l'ensemble de calcul analogique (44) présente un caractère modulaire permettant de calculer une expression de la forme:

$$k \, Log \frac{(I)_\alpha}{(I)_\beta}$$

où k représente un coefficient d'atténuation, $(I)_\alpha$ l'intensité lumineuse de l'un des *n* faisceaux lumineux auquel est associée la longueur d'onde $\lambda_\alpha$ et $(I)_\beta$ l'intensité lumineuse d'un autre des *n* faisceaux lumineux auquel est associée la longueur d'onde $\lambda_\beta$.

**Patentansprüche**

1. Photometrische Meßeinrichtung zur automatischen Untersuchung von komplexen Lösungen mit veränderbarem Untergrundgeräusch mit:

— einer geregelten (4) Lichtquelle, mit der mittels einer geeigneten Optik (6 und 12) eine Meßzelle (8) beleuchtbar ist, die eine zu untersuchende Lösung enthalten kann,

— Mitteln (20, 22, 82, 84, 86) zum Teilen des aus der Meßzelle (8) austretenden Lichtbündels in n Lichtbündel, wobei n eine ganze Zahl größer als 2 ist,

— Ausgleichmitteln (24), mit denen die Beleuchtungsstärke der n Lichtbündel ausgleichbar ist,

— Mitteln (26), um die n Lichtbündel monochromatisch derart zu machen, daß jedem dieser n Bündel eine vorbestimmte Wellenlänge ($\lambda_1$, $\lambda_2$, $\lambda_3$) zugeordnet ist,

— Erfassungsmitteln (46), mit denen jedes der n erhaltenen Lichtbündel in ein entsprechendes elektrisches Signal umwandelbar ist,

— einer analogen Recheneinheit (44), mit der die Konzentration von mindestens n-1 chemischen Stoffen berechenbar ist, die in der Lösung vorhanden sind und

— Anzeigemitteln (76) für die Ergebnisse,

dadurch gekennzeichnet, daß die Vorrichtung ferner mindestens einen Diskriminator (28, 78) aufweist, mit dem die n Lichtbündel voneinander unterscheidbar sind, daß der Diskriminator (28, 78) um eine Achse drehbar ist, die einen Planspiegel (36) und ein Teil mit Löchern (40) aufweist, die radial dieses Teil (38) durchqueren, daß der Planspiegel (36) und die Löcher (40) derart angeordnet sind, daß eines der n Lichtbündel, welches durch eines dieser Löcher eintritt, unmittelbar hindurchgeht oder an dem Planspiegel (36) reflektiert wird und durch ein anderes Loch (40) austretend die Erfassungsmittel (46) erreicht, wobei die Anzahl der Löcher mindestens 4· beträgt.

2. Photometrische Meßeinrichtung nach Anspruch 1, dadurch gekennzeichnet, daß der Diskriminator (28 und 78) um eine Achse mit kontinuierlicher Bewegung drehbar ist.

3. Photometrische Meßeinrichtung nach Anspruch 1 oder 2, dadurch gekennzeichnet, daß im Falle einer photometrischen Serien messung die Erfassungsmittel (46) von einer einzigen Erfassungseinrichtung gebildet sind.

4. Photometrische Meßeinrichtung nach Anspruch 1 oder 2, dadurch gekennzeichnet, daß im Falle einer kontinuierlichen photometrischen Messung die Erfassungsmittel (46) von n Erfassungseinrichtungen gebildet sind, wobei der Diskriminator (28, 78) festbleibt.

5. Photometrische Meßeinrichtung nach einem der Ansprüche 1 bis 4, dadurch gekennzeichnet, daß der Diskriminator (28, 78) eine Markierungsvorrichtung umfaßt, mit der das von dem Diskriminator ausgehende Lichtbündel lokalisierbar ist, wobei diese Markierungsvorrichtung elektrisch mit der analogen Recheneinheit (44) verbunden ist und ermöglicht, die mit den von dem Diskriminator ausgehenden Lichtbündel verbundenen Rechnungen auszulösen.

6. Photometrische Meßeinrichtung nach einem der Ansprüche 1 bis 5, dadurch gekennzeichnet, daß die Mittel zum Teilen des von der Meßzelle (8) ausgehenden Lichtbündels in n Lichtbündel von n-1 Strahlenteilern (20, 22, 82, 84, 86), die hintereinander angeordnet und in Bezug auf das von der Meßzelle ausgehende Bündel um 45° geneigt sind, und von Planspiegeln (30) gebildet sind, wodurch die n Bündel auf den Diskriminator (28, 78) lenkbar sind.

7. Photometrische Meßeinrichtung nach einem der Ansprüche 1 bis 6, dadurch gekennzeichnet, daß die Mittel um jeden der n Lichtbündel monochromatisch zum machen, von festen Interferenzfiltern (26) gebildet sind, die einem bestimmten und für die Art der erwünschten Messung geeigneten Wellenlängenintervall $(\lambda \pm \Delta \lambda)$ entsprechen.

8. Photometrische Meßeinrichtung nach einem der Ansprüche 1 bis 6, dadurch gekennzeichnet, daß die Mittel, mit denen jedes der n Lichtbündel monochromatisch machbar ist, von Monochromatoren (26) gebildet sind.

9. Photometrische Meßeinrichtung nach einem der Ansprüche 1 bis 8, dadurch gekennzeichnet, daß die analoge Recheneinheit (44) ein Modul aufweist, mit dem ein Ausdruck der Form

$$k \, \text{Log} \frac{(I)_\alpha}{(I)_\beta}$$

berechenbar ist, wobei k einen Dämpfungskoeffizienten, $(I)_\alpha$ die Beleuchtungsstärke eines der n Lichtbündel, der die Wellenlänge $\lambda_\alpha$ zugeordnet ist, und $(I)_\beta$ die Beleuchtungsstärke eines anderen der n Lichtbündel bedeutet, dem die Wellenlänge $\lambda_\beta$ zugeordnet ist.

**Claims**

1. Photometric apparatus for the automatic study of complex solutions having variable background noise comprising:
a light source (2) with a control (4) for the illumination, by means of an appropriate optical system (6 and 12), a measuring cell (8) adapted to contain a solution for study,
beam-splitting means (20, 22, 82, 84, 86) for splitting the light beam emitted by the measuring cell (8) into n light beams where n is an integer greater than 2,
equilibration means (24) for equilibration of the luminous intensity of the n light beams,
means (26) for monochromatising the n light beams whereby to associate each of the n beams with a pre-selected wavelength $(\lambda_1, \lambda_2, \lambda_3)$,
detection means (46) adapted to convert each of the n light beams received into a corresponding electrical signal,
an analog calculator (44) for the calculation of the concentration of the at most n-1 chemical species present in the solution, and
display means (76) for the results,
characterised in that it additionally comprises at least one discriminator (28, 78) for distinguishing the n light beams from one another, said discriminator (28, 78) being adapted to rotate around an axis comprising a plane mirror (36) and a member (38) having bores (40) radially traversing said member (38), the plane mirror (36) and the bores (40) being positioned in such a manner than one of the said n light beams entering by one of the bores is directly transmitted or substantially completely reflected by the plane mirror (36), and leaving by another bore (48), reaches the detection means (46), the bores being at least four in number.

2. Photometric device according to claim 1, characterised in that the discriminator (28 and 78) is adapted to rotate around its axis continuously.

3. Photometric device according to either of claims 1 and 2, characterised in that the detection means (46) comprises a single detector in the case of sequential photometric measurement.

4. Photometric device according to either of claims 1 and 2, characterised in that the detection means (46) comprise n detectors, the discriminator (28, 78) being fixed, in the case of continuous photometric measurement.

5. Photometric device according to any one of claims 1 to 4, characterised in that the discriminator comprises a registration device, for registration of the light beams issuing from the discriminator, said registration device being electrically connected to the analog calculator (44) and enabling release of the calculation associated with the beam issuing from the discriminator.

6. Photometric device according to any one of claims 1 to 5, characterised in that the beam splitting means for the light beam emitted from the measurement cell (8) into *n* light beams comprise n-1 half-silvered mirrors (20, 22, 82, 84, 86) located one beyond behind the other, inclined at 45° with respect to the beam emitted by the measurement cell (8) and by the flat mirrors (30) for directing the *n* beams into the discriminator (28, 78).

7. Photometric device according to any one of claims 1 to 6, characterised in that the means for monochromatising each of the *n* light beams comprise fixed interference filters (26), corresponding to a predetermined wavelength differ-ence ($\lambda \pm \Delta\lambda$) adapted to the desired type of measurement.

8. Photometric device according to any one of claims 1 to 6, characterised in that the means for monochromatising each of the *n* light beams comprise monochromators (26).

9. Photometric device according to any one of claims 1 to 8, characterised in that the analog calculator (44) is of modular type permitting calculation of an expression of the form:

$$K \, \mathrm{Log} \frac{(I)_\alpha}{(I)_\beta}$$

k represents an attenuation coefficient, $(I)_\alpha$ represents the luminous intensity of one of the *n* light beams associated with wavelength $\lambda_\alpha$, and $(I)_\beta$ represents the luminous intensity of another of the *n* light beams associated with the wavelength $\lambda_\beta$.

0 033 253

FIG.1

FIG.2

FIG. 3

FIG.4

FIG.5

FIG.7

FIG.6

FIG.8